# FASCICULE DE BREVET EUROPEEN

(11) **EP 1 768 051 B1**
(45) Date de publication et mention de la délivrance du brevet: **07.08.2013**
(21) Numéro de dépôt: 06022214.8
(22) Date de dépôt: 25.04.2002
(51) Int. Cl.: G06K 19/077, G06K 19/02

(54) **Couverture de passeport incorporant un dispositif d'identification radiofréquence**
Umschlag für einen Reisepass, der eine Vorrichtung zur Radiofrequenzidentifikation einschließt
Passport cover incorporating a radiofrequency identification device

(30) Priorité: 26.04.2001 FR 0105616
(43) Date de publication de la demande: 28.03.2007
(62) Demande divisionnaire de: 02727693.0
(73) Titulaire: Arjowiggins Security, 92100 Boulogne Billancourt (FR)
(72) Inventeur: Rancien, Sandrine, 38140 La Murette (FR); Mayade, Thierry, 38850 Paladru (FR)
(74) Mandataire: Tanty, François

(56) Documents cités:
- WO-A-99/44172
- JP-A- 2001 092 934
- US-A- 4 474 292
- US-A- 5 528 222
- US-A- 5 741 392

## Description

La présente invention concerne des structures procédés de fabrication de multicouches telles que des couvertures de livrets.

Les papiers couvertures des livrets délivrés par les administrations subissent des chocs mécaniques et thermiques très variés, que ce soit lors de leur fabrication ou lors de leur utilisation. Ces papiers couvertures ont subi le plus souvent une opération de grainage destinée à leur donner un aspect de surface attractif. Lors de cette opération de grainage, la couverture passe entre deux rouleaux d'embossage où elle est soumise à une pression relativement importante, de l'ordre d'une centaine de bars (10⁷ Pa).

De plus, ces papiers couvertures des livrets ont subi dans certains cas aussi une opération d'enjolivure par application d'un «foil» métallisé ou holographique par une opération dite de transfert à chaud et sous pression. Lors de cette opération de dépôt de «foil», la couverture passe dans une presse où elle est soumise à une pression relativement importante et à une température relativement élevée.

En outre, dans le cas particulier du passeport, le livret comprend un cahier constitué d'un ensemble de feuillets comportant une page de garde qui sera contrecollée sur la face intérieure du volet avant de la couverture et un film transparent destiné à être transféré à chaud sur une des pages intérieures ou sur la page de garde pour protéger les mentions variables qui y ont été inscrites préalablement. Lors de l'opération de transfert, le passeport est introduit dans un laminateur entre deux rouleaux chauffés, et la couverture est soumise une nouvelle fois à une pression non négligeable. La température à laquelle la couverture est exposée peut atteindre 130°C pendant plusieurs secondes.

Bien entendu, le passeport doit par ailleurs présenter une durée de vie de plusieurs années, en particulier de dix ans en Europe, et doit notamment posséder les qualités de résistance à la circulation suffisantes.

Pour répondre aux contraintes mentionnées ci-dessus, certaines couvertures destinées aux passeports sont actuellement fabriquées en imprégnant d'un polymère jusqu'à saturation un support cellulosique de 200 µm d'épaisseur, puis en déposant par enduction à la râcle, sur l'une de ses faces, une couche de recouvrement de 50 µm d'épaisseur, à base de polymères et de colorants, pouvant comporter des micro-billes expansées. Un vernis peut ensuite être appliqué sur la couche déposée par enduction pour conférer notamment de la brillance à la couverture et une certaine résistance mécanique à la rayure ou à l'abrasion.

Par ailleurs, on a cherché à renforcer la sécurité des passeports, notamment en les munissant d'un dispositif d'identification radio-fréquence (RFID), comme décrit dans le brevet US 5 528 222. Ce brevet décrit un complexe qui comprend une puce et une antenne, ce complexe étant ensuite inséré par exemple dans le volet avant de la couverture du passeport. Ce brevet n'aborde toutefois pas de façon détaillée la manière dont le dispositif d'identification radio-fréquence est finalement intégré au passeport. Un premier inconvénient d'une telle couverture avec dispositif d'identification radio fréquence se situe dans l'absence d'homogénéité de l'épaisseur entre le volet avant et le volet arrière du passeport. Un second inconvénient vient du fait que l'insertion du complexe dans le passeport entraîne une opération de transformation supplémentaire sur la machine de montage des passeports.

La demande internationale WO 00/26856 mentionne également la possibilité de munir un passeport d'un dispositif RFID. La puce est mise en place dans une ouverture d'un film en polyimide ou polyester, et maintenue dans cette ouverture au moyen d'une résine.

Le passeport malais actuellement en circulation est muni d'un dispositif d'identification radio-fréquence. Ce dispositif d'identification est inséré dans le volet arrière du passeport lors de son montage, entre le papier couverture grainé et la page de garde du cahier de pages intérieures. Ce dispositif d'identification radiofréquence se présente sous la forme d'un complexe trijet comprenant une puce reliée à une antenne, tous deux supportés par un film polyester, lui-même inséré entre deux autres films polymère destinés à protéger la puce et l'antenne. Ce complexe présente une surépaisseur au niveau de la puce. L'insertion de ce complexe dans le volet arrière du passeport est à l'origine de deux types de surépaisseurs : différence d'épaisseur de 1650 µm entre le volet avant et le volet arrière du passeport, et différence d'épaisseur de 650 µm sur le volet arrière entre la zone où se trouve la puce et la zone où se trouve l'antenne. L'aspect d'un tel passeport attire de plus l'attention des falsificateurs potentiels sur la présence du dispositif RFID.

Il existe, enfin, des passeports de démonstration dans lesquels le dispositif d'identification radiofréquence constitué simplement d'un tag (support polyester sur lequel sont présents la puce et l'antenne) comme par exemple le dispositif de marque Tag It ® de la société TEXAS INSTRUMENTS, est inséré entre le papier couverture grainé et la page de garde du cahier, collée sur la couverture. La puce entraîne une surépaisseur locale de plus de 200 µm et sa présence se devine. De plus, elle demeure exposée aux chocs et aux contraintes subis par le passeport lors du transfert à chaud du film transparent, notamment.

On connaît par la demande internationale WO 00/42569 une étiquette incorporant un dispositif d'identification radiofréquence. Cette étiquette comporte une couche adhésive et une couche de recouvrement dans l'épaisseur de laquelle est logée la puce du dispositif d'identification radiofréquence. Cette dernière est reliée à une antenne imprimée. Une telle étiquette ne présente pas de surépaisseur au niveau de la puce, mais cependant elle n'est pas adaptée à constituer un dispositif de sécurité satisfaisant pour un passeport, car la présence de l'étiquette sur un des volets de la couverture du passeport entraînerait une différence d'épaisseur entre les deux volets. L'aspect d'un tel passeport attire également l'attention des falsificateurs potentiels sur la présence du dispositif RFID.

L'invention se propose de pallier aux inconvénients de l'art antérieur, notamment de fournir un papier couverture de livret comportant un dispositif d'identification radio fréquence, ne présentant aucune surépaisseur localisée, et de fournir un papier couverture de livret comportant un dispositif d'identification radiofréquence prêt à être monté dans un passeport sans opération supplémentaire pour le transformateur.

Il existe également un besoin pour disposer de livrets, notamment de passeports, qui soient esthétiques et dans lesquels le dispositif d'identification radiofréquence est suffisamment bien protégé pour garantir la fiabilité nécessaire pendant toute la durée de validité du livret, c'est-à-dire plusieurs années dans le cas d'un passeport.

Le brevet décrit une structure multicouche tel qu'un papier couverture de livret, notamment de passeport, caractérisée par le fait qu'elle comporte un dispositif d'identification radiofréquence ayant une puce, par le fait que la puce est logée dans l'épaisseur de la structure multicouche sans générer de surépaisseur, et par le fait que les matériaux constituant les différentes couches de la structure multicouche sont choisis, ainsi que l'épaisseur desdites couches, de manière à ce que la couverture soit résistante aux chocs mécaniques et thermiques. Notamment, le papier couverture doit être apte à subir les traitements de grainage et/ou d'enjolivure par dépôt d'un film ou « foil » par transfert à chaud et sous pression et/ou de lamination lors de dépôt des films de sécurité transparents sur les pages comportant les mentions variables du passeport.

L'invention permet d'obtenir un passeport dont la couverture soit esthétique et n'attire pas l'attention des falsificateurs potentiels sur le dispositif d'identification radiofréquence, car ne présentant pas de surépaisseur localisée et ayant, le cas échéant, un aspect grainé.

En outre, de par l'absence de surépaisseur localisée et la protection du dispositif d'identification radiofréquence, le papier couverture selon l'invention peut être utilisé lors de la fabrication du passeport de la même manière que les papiers couvertures conventionnels n'incorporant pas de dispositif d'identification radiofréquence, ce qui est très avantageux pour les administrations notamment.

La puce du dispositif d'identification radiofréquence est située à proximité de la pliure de la couverture du livret, de manière à se trouver dans une zone moins exposée aux contraintes, car partiellement rigidifiée par la pliure.

La structure multicouche peut comporter au moins une feuille ayant une base fibreuse, comportant une quantité plus ou moins importante de fibres naturelles et/ou synthétiques, notamment de cellulose. Cette base fibreuse peut contenir un matériau polymère choisi de manière à conférer à la structure multicouche, d'une part des propriétés de résistance à la déchirure pour résister aux conditions d'utilisation ultérieures et d'autre part des propriétés de résilience suffisantes pour protéger le dispositif d'identification radiofréquence des chocs mécaniques. Ce matériau peut être choisi par exemple dans la liste suivante : caoutchoucs naturels ou synthétiques, caoutchouc styrène butadiène, polybutadiène, copolymères butadiène-acrylonitrile, polymères acryliques, polychloroprène, et leurs mélanges.

Dans une réalisation particulière, la puce du dispositif d'identification radiofréquence est logée dans une couche de la structure multicouche qui présente une épaisseur supérieure ou égale à l'épaisseur de la puce et une résilience lui permettant, en cas de compression momentanée, de conserver une épaisseur supérieure ou égale à l'épaisseur de la puce, de manière à assurer la protection de celle-ci. Cette couche peut comporter une base fibreuse comportant une quantité plus ou moins importante de fibres naturelles et/ou synthétiques, notamment de cellulose, cette base comportant elle-même un matériau polymère choisi de manière à conférer à la structure multicouche les propriétés de résilience suffisantes pour protéger le dispositif d'identification radiofréquence des chocs mécaniques. Cette couche peut être aussi un matériau de base polymère uniquement, par exemple une enduction à base de PVC, éventuellement plastifié, avec éventuellement des agents d'expansion.

La structure multicouche peut comporter une couche d'un matériau à base polymère, apte au grainage. Ce polymère peut être choisi dans la liste suivante : polymères à base de PVC, éventuellement plastifié, de polyuréthanes ou d'élastomères naturels ou synthétiques, avec éventuellement des agents d'expansion, émulsions de PVC et de copolymère butadiène/acrylonitrile ou copolymère butadiène/acrylonitrile/styrène, et leurs mélanges.

Le brevet décrit un passeport dont la couverture est constituée par une structure multicouche telle que définie plus haut.

Le brevet décrit également divers procédés de fabrication d'une couverture telle que définie plus haut.

Le brevet décrit un procédé, caractérisé par le fait qu'il comporte les étapes suivantes :
- disposer le dispositif d'identification radiofréquence sur une première feuille,
- assembler cette première feuille sur une deuxième feuille de manière à obtenir une épaisseur résultante sensiblement constante, la deuxième feuille étant suffisamment compressible au moment de l'assemblage pour accueillir la puce dans son épaisseur.

L'invention a pour objet un procédé selon la revendication 1.

On peut par exemple réaliser la deuxième feuille avec un filigrane en creux dont la profondeur est supérieure à l'épaisseur de la puce, disposer la puce sur la première feuille et contrecoller la deuxième feuille avec la première feuille de manière à ce que la puce vienne se loger dans le filigrane. La première feuille peut également comporter une cavité dans laquelle est partiellement logée la puce.

Le brevet décrit encore un procédé, caractérisé par le fait qu'il comporte les étapes suivantes :
- disposer le dispositif d'identification radiofréquence (puce et antenne) sur une première feuille,
- réaliser une deuxième feuille avec un trou ayant une forme adaptée à contenir la puce,
- fabriquer une troisième feuille,
- assembler par contrecollage les trois feuilles de façon à ce que la deuxième feuille soit placée en sandwich entre la première feuille et la troisième feuille et à ce que la puce soit logée dans le trou de la deuxième feuille.

Le brevet décrit encore un procédé, caractérisé par le fait qu'il comporte les étapes suivantes :
- fabriquer une première feuille,
- réaliser une enduction avec une réserve sous forme d'une cavité ayant une forme adaptée à contenir la puce sur cette première feuille,
- disposer le dispositif RFID sur cette feuille de façon à ce que la puce soit logée dans la cavité réalisée précédemment,
- réaliser une enduction sur la feuille du coté du dispositif RFID de façon à protéger ce dernier.

Le brevet décrit encore un procédé, caractérisé par le fait qu'il comporte les étapes suivantes :
- disposer le dispositif d'identification radiofréquence (puce et antenne) sur une première feuille,
- déposer sur cette première feuille une enduction d'une épaisseur supérieure à celle de la puce.

On peut par exemple disposer le dispositif d'identification radiofréquence sur une face de la feuille puis enduire cette face de la feuille d'un mélange à base d'une résine liquide non gélifiée, l'épaisseur déposée étant supérieure à celle de la puce après séchage. La couche déposée par enduction peut être grainée après séchage.

On peut également déposer sur la face de la feuille portant le dispositif d'identification radiofréquence une résine à base d'un composant thermofusible, l'épaisseur déposée étant supérieure à l'épaisseur de la puce. On peut marquer à chaud l'enduction afin de créer un grain juste avant le séchage final.

Dans les exemples de procédés ci-dessus, la première feuille peut comporter une base fibreuse, notamment une base papier, et l'on peut saturer cette base fibreuse avec un matériau, notamment un polymère, par exemple un latex d'élastomère, permettant d'assurer la résistance au déchirement et la protection ultérieure du dispositif d'identification radiofréquence. Cette première feuille peut en outre être enduite par un mélange à base polymère, apte au grainage. Ce mélange à base polymère apte au grainage peut en variante être déposé par enduction après assemblage des première et deuxième feuilles. La deuxième feuille peut être imprégnée avec un polymère thermoplastique.

On peut encore, selon un autre procédé, réaliser une première feuille à partir d'une base fibreuse, de préférence saturée en latex, embosser cette première feuille de manière à créer une cavité ayant une forme adaptée à celle de la puce, réaliser une deuxième feuille à partir d'une base fibreuse, de préférence saturée par imprégnation ou précipitation en masse avec des résines synthétiques ou naturelles, déposer sur cette deuxième feuille une puce et une antenne et contrecoller cette deuxième feuille avec la première de manière à ce que la puce vienne se loger dans la cavité réalisée par l'embossage.

La puce et l'antenne peuvent être dans un exemple de mise en oeuvre de l'invention fixée sur un film de support, par exemple un film de polyester, avant d'être associées à une base fibreuse.

Lorsque l'antenne du dispositif d'identification RFID est réalisée avec une encre conductrice, celle-ci peut comporter un ou plusieurs agent d'infalsification, sous réserve bien entendu de la compatibilité avec l'encre utilisée.

D'autres caractéristiques et avantages de la présente invention ressortiront à la lecture de la description détaillée qui va suivre, d'exemples de mise en oeuvre non limitatifs, et à l'examen du dessin annexé, sur lequel :
- la figure 1 représente de manière schématique, en perspective, un passeport
- la figure 2 représente le passeport de la figure 1, couverture à plat,
- la figure 3 est une coupe partielle et schématique selon III-III de la figure 2,
- la figure 4 illustre un premier exemple de procédé de fabrication de la couverture,
- la figure 5 illustre un deuxième exemple de procédé de fabrication de la couverture,
- la figure 6 est une coupe partielle et schématique représentant une cavité formée sur l'une des feuilles de la couverture du passeport, et
- la figure 7 est une coupe schématique et partielle d'une cavité réalisée par impression.

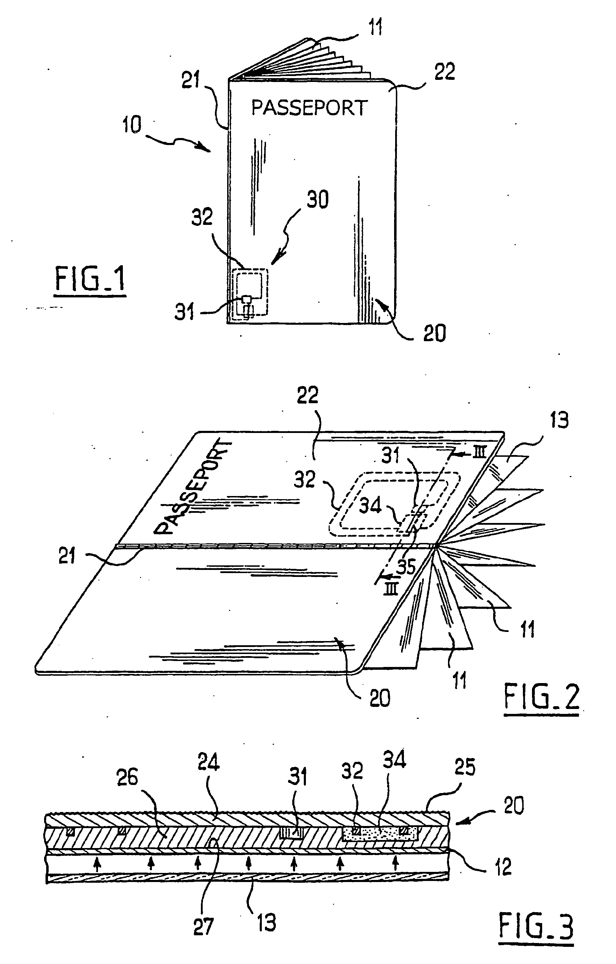

On a représenté sur les figures 1 à 3 un passeport 10 dont la couverture 20 est munie d'un dispositif d'identification radiofréquence 30, comportant une puce 31 et une antenne 32. De nombreux fabricants proposent actuellement des dispositifs d'identification radiofréquence susceptibles de convenir, de sorte que la puce 31 et l'antenne 32 ne seront pas décrites en détail, dans un souci de simplification de l'exposé. On peut citer notamment comme fabricants de puces adaptées, la société INSIDE TECHNOLOGIES, la société TEXAS INSTRUMENTS ou encore la société POLYMERE FLIP CHIP CORPORATION, cette liste n'étant pas limitative.

Dans une réalisation non illustrée, la puce intègre une antenne. Cela simplifie l'incorporation du dispositif d'identification radiofréquence dans la couverture du passeport mais présente l'inconvénient de réduire la portée de la liaison radio pouvant être établie avec un dispositif de lecture et/ou d'écriture.

La puce 31 se situe de préférence, comme on peut le voir sur les figures 1 et 2, à proximité de la pliure 21 de la couverture 20, par exemple dans une zone correspondant à un quart de la largeur du volet avant 22 ou arrière 24 de la couverture, mesurée à partir de la pliure 21.

Le passeport 10 comporte un cahier constitué d'un ensemble de feuillets 11 ayant une page de garde 12 collée sur le verso du volet avant 22 de la couverture. Cette page de garde 12 est destinée à recevoir une impression de mentions variables puis à être recouverte par un film ou « foil » transparent adhésif 13, appliqué par transfert à chaud.

Dans l'exemple des figures 1 à 3, la couverture 20 comporte une couche de support 24 dont une face est recouverte par une couche 25 d'un matériau apte au grainage, et la surface extérieure de la couverture 20 présente un grain.

L'autre face de la couche de support 24 porte la puce 31 et son antenne 32 et elle est recouverte par une deuxième couche 26, dans l'épaisseur de laquelle est logée la puce 31. La face 27 de la couche 26, opposée à la couche 24, constitue la surface intérieure de la couverture 20.

Lorsque l'antenne 32 est réalisée par impression sélective d'une encre conductrice sur la couche 24, et présente plusieurs spires, il peut être nécessaire de déposer localement un isolant 34 sur une portion des spires afin de pouvoir réaliser sur cet isolant un pont de liaison électrique 35, toujours par dépôt sélectif d'une encre conductrice, pour relier l'une des extrémités des spires à la puce 31. L'isolant 34 peut être déposé, par exemple, par impression sélective. La puce 31 peut être reliée à l'antenne 32 selon des procédés bien connus, notamment par le biais d'une colle conductrice, ou encore par thermo-compression ou par soudure.

L'épaisseur de la couche 26 est supérieure à l'épaisseur de la puce 31, de sorte que cette dernière est protégée des chocs à la fois par la couche 26 et par la couche 24.

L'épaisseur de la couche 26 est suffisamment grande, dans l'exemple décrit, pour qu'en cas de compression de la couverture durant les traitements d'enjolivure et de confection du passeport, la couche 26 conserve une épaisseur supérieure à celle de la puce 31. Ainsi, compte tenu des matériaux utilisés pour réaliser les couches 24 et 26 et des épaisseurs de ces dernières, la couverture est capable de subir les traitements conventionnels de grainage et de transfert à chaud du film 13 sur la page de garde 12.

D'une manière générale, la couverture 20 peut être réalisée de multiples manières, et les couches 24 et 26 peuvent présenter des constitutions différentes, notamment comporter une base fibreuse ou non.

On va maintenant donner divers exemples de fabrication de la couverture.

### Exemple 1

On commence par réaliser une première feuille ayant une base papier (fibres de cellulose avec ou sans fibres synthétiques), que l'on sature en latex de copolymère styrène-butadiène pour assurer la résistance au déchirement et la protection ultérieure du dispositif d'identification radiofréquence.

On dépose ensuite sur une face de cette première feuille, après séchage, la puce et l'antenne du dispositif d'identification radiofréquence, par un procédé conventionnel. On peut notamment réaliser l'antenne par sérigraphie au moyen d'une encre conductrice, puis établir les connexions électriques avec la puce par thermo-compression. Le cas échéant, on dépose un isolant sur une partie des spires et l'on réalise sur cet isolant un pont de liaison électrique entre une extrémité des spires et la puce.

A ce stade de la fabrication, sur l'une des faces de la première feuille, il y a une surépaisseur au niveau de l'antenne de l'ordre de 30 µm et au niveau de la puce de l'ordre de 200 µm. L'épaisseur de la première feuille peut être de l'ordre de 200 µm ailleurs, par exemple.

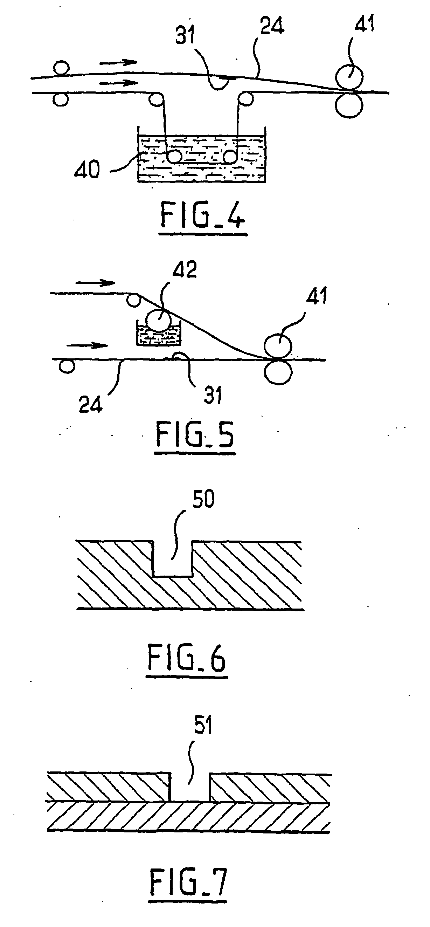

On a représenté sur la figure 4, schématiquement, la première feuille ainsi formée, avec la puce 31 fixée dessus.

Par ailleurs, on imprègne avec un mélange à base de polymère(s), par exemple de styrène-butadiène, un papier de type buvard, d'épaisseur supérieure à celle de la puce, en le faisant passer dans un bain d'imprégnation 40 pour former une deuxième feuille. L'épaisseur de cette deuxième feuille peut être de l'ordre de 300 µm, par exemple.

Ensuite, on fait passer entre deux rouleaux 41 le papier de type buvard, humide saturé en polymère(s) et la première feuille préalablement fabriquée, avec le dispositif d'identification radiofréquence sur sa face intérieure.

Lors de l'opération d'essorage, les deux feuilles se lient grâce au mélange à base de polymère(s) dont a été imprégné le papier de type buvard et ce dernier épouse le relief de la puce du fait de sa compressibilité à l'état humide. Ainsi, à l'emplacement de la puce, sous l'effet de la pression des rouleaux 41, le matériau d'imprégnation est chassé et la puce s'enfonce dans le papier de type buvard.

On enduit ensuite le complexe ainsi formé, sur une face, par exemple la face extérieure de la première feuille, avec un mélange de polymères, afin de conférer une aptitude au grainage. L'épaisseur de la couche déposée par enduction est par exemple de 50 µm.

Un vernis d'impression (mat ou brillant) peut être appliqué sur la couche ainsi déposée, pour améliorer l'aspect de surface et la résistance à la circulation.

### Exemple 2

Dans ce deuxième exemple, on réalise une première feuille identique à celle de l'exemple précédent, portant le dispositif d'identification radiofréquence.

On amène un papier de type buvard, d'épaisseur supérieure à celle de la puce, par exemple de 300 µm d'épaisseur, au contact d'une encolleuse 42 pour imprégner l'une de ses faces d'un polymère tel qu'un polyacétate de vinyle, puis cette face ainsi enduite est amenée au contact de la première feuille, entre deux rouleaux 41, comme illustré à la figure 5.

Le papier de type buvard, saturé en polymère(s) et la première feuille préalablement fabriquée, portant le dispositif d'identification radiofréquence sur sa face intérieure, se lient, le papier de type buvard épousant le relief de la puce du fait de sa compressibilité à l'état humide.

On enduit ensuite le complexe ainsi formé sur l'une de ses faces, destinée à constituer la surface extérieure de la couverture, avec un mélange de polymères présentant une aptitude au grainage. L'épaisseur déposée par enduction, par exemple sur la face extérieure de la première feuille, peut être de l'ordre de 50 µm.

Comme dans l'exemple précédent, un vernis d'impression (mat ou brillant) peut être déposé pour améliorer l'aspect de surface et la résistance à la circulation.

### Exemple 3

On réalise une première feuille identique à celle des exemples précédents, portant le dispositif d'identification radiofréquence.

On fabrique une deuxième feuille 53 avec une base papier, représentée schématiquement à la figure 6, présentant un filigrane 50 en creux, de la forme de la puce 31. La profondeur du filigrane 50 est légèrement supérieure à l'épaisseur de la puce 31. L'épaisseur du papier est par exemple de l'ordre de 300 µm. La feuille 53 est de préférence saturée en polymère(s) pour assurer la protection ultérieure de la puce.

On contrecolle, après avoir repéré les emplacements de la puce 31 et du filigrane 50, la feuille 53 avec la première feuille précédemment réalisée, de manière à ce que la puce 31 vienne se loger dans le filigrane 50. Le collage peut se faire à froid ou à chaud. La feuille 53 étant encore humide, on passe le complexe ainsi formé entre deux rouleaux et l'on procède à son séchage.

On peut enduire la face du complexe destinée à constituer la surface extérieure du passeport avec un mélange de polymères présentant une aptitude au grainage et déposer sur cette enduction un vernis d'impression (brillant ou mat) afin d'améliorer l'aspect de surface et la résistance à la circulation.

### Exemple 4

On réalise une première feuille identique à celle des exemples précédents, portant le dispositif d'identification radiofréquence.

Une deuxième feuille est fabriquée avec un trou réalisé par gravure laser ou mécaniquement à l'emporte pièce, ce trou ayant une forme correspondant à celle de la puce et une épaisseur au moins supérieure à celle de la puce. Cette deuxième feuille peut éventuellement être saturée en polymère(s) pour assurer une protection ultérieure de la puce. La deuxième feuille présente par exemple une épaisseur de l'ordre de 200 µm.

On fabrique par ailleurs une troisième feuille, à partir d'une base papier, que l'on sature de préférence avec une ou plusieurs résines synthétiques ou naturelles, par exemple des latex élastomères, par imprégnation ou précipitation en masse, le matériau d'imprégnation étant choisi de manière à protéger le dispositif d'identification radiofréquence ultérieurement. Cette troisième feuille présente par exemple une épaisseur de l'ordre de 100 µm.

Ensuite, les trois feuilles sont contrecollées de manière repérée, la deuxième feuille étant appliquée sur la première feuille comportant la puce, cette dernière venant se loger dans le trou. La troisième feuille vient recouvrir la deuxième feuille du côté opposé à la première.

On enduit ensuite la face extérieure de la première feuille avec un mélange de polymères présentant une aptitude au grainage.

Eventuellement, un vernis d'impression (brillant ou mat) peut être déposé sur cette enduction pour améliorer l'aspect de surface et la résistance à la circulation.

### Exemple 5

On réalise une première feuille identique à celle des exemples précédents, portant le dispositif d'identification radiofréquence.

On enduit ensuite cette feuille à l'aide d'un racle, sur la face comportant la puce, avec un mélange type « plastisol » à base de PVC additionné de plastifiant et d'agent gonflant. On gélifie l'ensemble dans un four à tunnel à la température de l'ordre de 200°C. Les quantités de plastifiant et d'agent gonflant sont ajustées de façon à ce que l'enduction présente après gélification et refroidissement une compressibilité telle que l'épaisseur de la couche, lors d'un enfoncement ou après un enfoncement, reste supérieure à l'épaisseur de la puce, afin de protéger cette dernière. On dépose par exemple une épaisseur de l'ordre de 300 µm. La couche déposée par enduction peut être grainée après séchage. Cette couche, après gélification et refroidissement, apporte les caractéristiques mécaniques recherchées.

Un vernis d'impression (brillant ou mat) peut être déposé sur l'enduction pour améliorer l'aspect de surface et la résistance à la circulation.

### Exemple 6

On réalise une feuille identique à la première feuille des exemples précédents, portant le dispositif d'identification radiofréquence.

On enduit ensuite cette feuille sur la face portant le dispositif d'identification radiofréquence avec un mélange à base d'une résine dite «*hotmelt*», comprenant une poudre thermofusible, par exemple du polyuréthane à l'aide d'un système d'extrusion adapté.

Le polymère retenu pour l'enduction est choisi de manière à présenter une compressibilité telle que l'épaisseur de la couche déposée par enduction, lors d'un enfoncement ou après enfoncement en cas de choc, reste supérieure à l'épaisseur de la puce, afin de protéger cette dernière. L'épaisseur déposée est par exemple de l'ordre de 300 µm.

On peut marquer à chaud l'enduction réalisée afin de créer le grain souhaité.

Ensuite, un vernis d'impression (brillant ou mat) peut être déposé sur la couche déposée par enduction, éventuellement grainée, pour améliorer son aspect de surface et la résistance à la circulation.

### Exemple 7

On réalise une première feuille à partir d'une base papier (fibres de cellulose avec ou sans fibres synthétiques), éventuellement saturée en latex, et l'on enduit une première face de cette base papier d'un mélange à base de polymères présentant une aptitude au grainage, puis on dépose éventuellement un vernis d'impression (brillant ou mat) sur cette enduction. L'épaisseur de la base papier est par exemple de l'ordre de 200 µm et l'épaisseur de la couche apte au grainage de l'ordre de 50 µm.

On réalise ensuite une cavité, de profondeur au moins supérieure à celle de la puce et ayant une forme adaptée à celle de la puce, par embossage mécanique sur la deuxième face de cette base papier.

Eventuellement, la première face est grainée simultanément.

Une seconde feuille est fabriquée par ailleurs, à partir d'une base papier qui est de préférence saturée par imprégnation ou précipitation en masse avec des résines synthétiques ou naturelles, par exemple des latex élastomères, visant à renforcer sa cohésion et à protéger ultérieurement le dispositif d'identification radiofréquence. L'épaisseur de cette seconde feuille est par exemple de 200 µm.

Sur cette seconde feuille, on dépose une puce et une antenne par un procédé conventionnel.

On contrecolle ensuite cette seconde feuille, portant la puce et l'antenne, sur la première feuille, de manière à ce que la puce vienne se loger dans la cavité réalisée par embossage.

Après contrecollage, le complexe formé est séché.

### Exemple 8 (Selon l'invention)

On réalise une première feuille comme dans l'exemple 7.

On réalise ensuite une cavité de profondeur sensiblement égale à la moitié de celle de la puce sur cette feuille, par embossage mécanique.

On réalise une deuxième feuille comme dans l'exemple 3, avec un filigrane dont l'épaisseur est sensiblement égale à la moitié de celle de la puce munie de son antenne, par exemple du type IC-Link® de la société INSIDE TECHNOLOGIES.

On assemble ensuite les deux feuilles, la puce étant complètement logée dans les cavités en regard de chacune des feuilles.

### Exemple 9

On réalise une première feuille identique à celle de l'exemple précédent.

On munit ensuite la face de cette première feuille opposée à celle portant l'enduction du dispositif d'identification radiofréquence.

Pour ce faire, on peut commencer par déposer une encre conductrice, par exemple par sérigraphie, de façon sélective afin de former deux zones de connexion pour la puce et un pont de liaison électrique qui permettra de relier ultérieurement une extrémité de l'antenne à l'une desdites zones de connexion.

On dépose ensuite une encre isolante, par exemple par sérigraphie, de façon sélective, afin de former une réserve au niveau des zones de connexion et au niveau de l'extrémité du pont de liaison opposée à la zone de connexion correspondante.

On réalise les spires de l'antenne en déposant de l'encre conductrice, par exemple par sérigraphie. L'encre utilisée peut contenir des agents d'infalsification. L'antenne est connectée électriquement par l'une de ses extrémités à l'une des zones de connexion précitées et par l'autre extrémité à l'extrémité libre du pont de liaison électrique.

On dépose une couche isolante, par exemple par sérigraphie, de façon sélective, de façon à former une réserve d'une épaisseur au moins équivalente à celle de la puce et pouvoir loger celle-ci au sein de la structure finale sans créer de surépaisseur. L'épaisseur de la couche d'isolant déposée est par exemple de l'ordre de 300 µm. L'isolant peut être déposé en une ou plusieurs passes et peut comporter un agent d'expansion.

Après mise en place de la puce on procède, éventuellement, au dépôt d'une couche de protection facultative sur la couche d'isolant.

### Exemple 10

On commence par réaliser une première feuille identique à celle de l'exemple précédent.

Ensuite, on dépose par exemple par sérigraphie sur la face de cette première feuille opposée à celle qui a été enduite d'un mélange apte au grainage, une encre conductrice de manière à former les spires de l'antenne.

Après, on dépose de manière sélective une encre isolante 34, et l'on réalise le pont de liaison électrique 35 entre une extrémité des spires et une zone de connexion pour la puce. On procède alors au dépôt d'une couche isolante, par exemple par sérigraphie, de façon sélective, afin de former une réserve d'épaisseur au moins équivalente à celle de la puce.

Une fois la puce mise en place dans la cavité formée dans la couche isolante, on peut recouvrir celle-ci d'une couche de protection facultative.

### Exemple 11

On procède comme dans l'exemple 1, à la différence près que la puce et l'antenne sont portées par un support flexible de faible épaisseur tel qu'un film synthétique, un film de polyester par exemple.

Le film de support, portant la puce et l'antenne, est ensuite associé à une feuille de type buvard.

Dans les exemples 1 à 6, la première feuille peut être réalisée, en variante, dès l'origine avec une enduction apte au grainage et/ou recevoir un vernis d'impression.

D'une manière générale, le matériau saturant la base papier de la première feuille des exemples 1 à 10 ou la deuxième feuille des exemples 1 à 4, peut être une résine synthétique, naturelle, par exemple un élastomère ou un mélange de résines, ce matériau étant choisi afin d'apporter de la flexibilité, améliorer la résistance à la déchirure, la résistance à la déformation lors d'une compression et la résilience. On peut notamment utiliser comme polymère de type élastomère, des copolymères de styrène butadiène (SBR), du polybutadiène (BR), des copolymères butadiène-acrylonitrile (NBR), des polymères acryliques, du polychloroprène, des polyisoprènes, cette liste n'étant pas limitative.

Comme mélange à base de polymère(s) utilisable pour conférer l'aptitude au grainage, on peut citer certains polymères nitro cellulosiques, polyurethanes, acryliques ou vinyliques.

Comme polymères utilisable(s) pour constituer l'isolant des exemples 5 et 6, on peut citer les polymères thermoplastiques à base de PVC, de polyuréthanes et les élastomères naturels ou synthétiques. On peut notamment utiliser du PVC plastifié ou « plastisol », qui contient des plastifiants, par exemple des esters de l'acide pthalique, de l'acide odipique, de l'acide sébacique ou de l'acide phosphorique. On peut aussi utiliser des élastomères de polyuréthane. On peut encore mélanger une émulsion de PVC avec d'autres dispersions de copolymères butadiène/acrylonitrile ou copolymère budatiène/acrylonitrile/styrène, qui jouent le rôle d'agents plastifiants. On peut enfin introduire dans le polymère, notamment lorsque celui-ci est déposé par impression ou enduction, et comporte par exemple du PVC, des agents d'expansion fonctionnant par exemple par un procédé exothermique. Comme agents d'expansion, on peut citer notamment des produits comme le Génitron® à base d'azodicarbonanide ou de sulfohydrazide, qui après décomposition à la température donne des gaz tels que le monoxyde d'azote ou l'hydrogène, le dioxyde de carbone ou l'ammoniac, entraînant ainsi la création de cellules et le gonflement de l'enduction. On peut aussi utiliser comme agent d'expansion de l'eau, dans le cas d'un isolant de type polyuréthane fabriqué à partir de disocyanate de thylène, de polyester, et de polyether.

Dans les exemples 1 à 10, on peut remplacer la base papier par toute autre base fibreuse, notamment un non tissé.

La couverture peut subir des traitements d'enjolivure, notamment l'application par transfert à chaud et sous pression d'un film métallisé coloré ou holographique, ce film pouvant être déposé sur la couverture avant collage du cahier ou sur le livret après mise en place du cahier.

La couverture peut recevoir l'impression par héliogravure ou par sérigraphie d'un motif visible ou invisible, de sécurité ou non.

On peut réaliser l'intégration de la puce dans la couverture du passeport par d'autres procédés que ceux qui viennent d'être décrits, en fonction de la structure du dispositif d'identification radiofréquence.

La couverture peut comporter un nombre plus ou moins grand de couches différentes.

L'antenne peut être réalisée autrement que par sérigraphie, par exemple par transfert d'un film recouvert de pistes conductrices en cuivre réalisées par gravure.

Sur les figures, les épaisseurs relatives réelles n'ont pas été respectées, dans un souci de clarté du dessin.

## Revendications

1. Procédé pour fabriquer une structure multicouche formant un papier couverture de passeport, la structure comportant un dispositif d'identification radiofréquence (31, 32) ayant une puce (31), la puce étant logée dans l'épaisseur de la structure multicouche sans générer de surépaisseur, et les matériaux constituant les différentes couches de la structure multicouche étant choisis, ainsi que l'épaisseur desdites couches, de manière à ce que la couverture (20) soit résistante aux chocs mécaniques et thermiques, notamment puisse subir un traitement de grainage et/ou d'enjolivure par dépôt d'un film par transfert à chaud et sous pression et/ou de lamination lors de dépôts de films de sécurité, la puce (31) étant située à proximité d'une pliure (21), et la structure ne présentant aucune surépaisseur localisée,
le procédé comportant l'étape suivante :
• disposer le dispositif d'identification radiofréquence sur une première feuille,
• et l'étape suivante:
contrecoller cette première feuille avec une deuxième feuille, la puce du dispositif d'identification radiofréquence étant située sur l'intérieur de la première feuille, un trou ou une cavité étant réalisé sur la deuxième feuille, ce trou ou cette cavité ayant une forme adaptée à recevoir la puce, la puce étant mise en place dans ledit trou ou cavité lors du contrecollage desdites feuilles, la première feuille comportant également une cavité dans laquelle est partiellement logée la puce,
la première feuille comportant une base fibreuse, notamment une base papier, cette base fibreuse étant saturée avec un matériau, notamment un latex d'élastomère, permettant d'assurer la résistance au déchirement et la protection ultérieure du dispositif d'identification radiofréquence, la puce et l'antenne du dispositif d'identification radiofréquence étant déposées sur une face de cette première feuille, après séchage.

2. Procédé selon la revendication 1, la puce du dispositif d'identification radiofréquence étant logée dans une couche (26) de la structure multicouche qui présente une épaisseur supérieure à l'épaisseur de la puce et une résilience lui permettant, en cas de compression momentanée, de conserver une épaisseur supérieure ou égale à l'épaisseur de la puce.

3. Procédé selon la revendication 2, ladite couche (26) comportant une base fibreuse.

4. Procédé selon la revendication 2 ou 3, ladite couche (26) comportant un matériau polymère choisi de manière à conférer à la structure multicouche des propriétés de résilience suffisantes pour protéger le dispositif d'identification radiofréquence des chocs mécaniques.

5. Procédé selon l'une quelconque des revendications précédentes, la structure multicouche comportant une couche d'un matériau à base polymère, apte au grainage, notamment choisi dans la liste suivante : polymères à base de PVC, éventuellement plastifié, de polyuréthanes ou d'élastomères naturels ou synthétiques, avec éventuellement des agents d'expansion, émulsions de PVC et de copolymère butadiène/acrylonitrile ou copolymère butadiène/acrylonitrile/styrène, et leurs mélanges.

6. Procédé selon l'une quelconque des revendications précédentes, l'antenne étant sérigraphiée.

7. Procédé selon la revendication 1, **caractérisé par le fait que** l'on réalise la deuxième feuille avec un filigrane (50) en creux dont la profondeur est supérieure à l'épaisseur de la puce (31), **par le fait que** l'on dispose la puce sur la première feuille et **par le fait que** l'on contrecolle la deuxième feuille avec la première feuille, de manière à ce que la puce (31) vienne se loger dans le filigrane (50).

8. Procédé selon l'une quelconque des revendications 1 à 7, **caractérisé par le fait que** la première feuille est enduite par un mélange à base polymère, apte au grainage.

## Patentansprüche

1. Verfahren zur Herstellung einer Mehrschichtstruktur, die einen Umschlag für einen Reisepass bildet, wobei die Struktur eine einen Chip (31) aufweisende Funkfrequenzidentifizierungsvorrichtung (31, 32) umfasst, wobei der Chip ohne Erzeugung einer Verdickung in der Dicke der Mehrschichtstruktur untergebracht ist, und die die einzelnen Schichten der Mehrschichtstruktur bildenden Werkstoffe sowie die Dicke dieser Schichten so gewählt sind, dass der Umschlag (20) gegenüber mechanischen und thermischen Stößen beständig ist und insbesondere einer Behandlung der Körnung und/oder Verzierung durch Auftrag einer Folie durch Wärmeübertragung und unter Druck und/oder der Laminierung bei Aufträgen von Sicherheitsfolien unterzogen werden kann, wobei sich der Chip (31) in Nähe eines Falzes (21) befindet und die Struktur keinerlei lokale Verdickung aufweist,
wobei das Verfahren folgenden Schritt umfasst:
- die Funkfrequenzidentifizierungsvorrichtung auf einer ersten Folie anordnen,
- und den folgenden Schritt:
diese erste Folie mit einer zweiten Folie kaschieren, wobei der Chip der Funkfrequenzidentifizierungsvorrichtung auf der Innenseite der ersten Folie gelegen ist, wobei auf der zweiten Folie ein Loch oder ein Hohlraum gebildet ist, wobei dieses Loch oder dieser Hohlraum eine Form besitzt, die dafür ausgelegt ist, den Chip aufzunehmen, wobei der Chip bei der Kaschierung dieser Folien in das Loch oder den Hohlraum eingesetzt wird, wobei die erste Folie ebenfalls einen Hohlraum umfasst, in dem der Chip teilweise eingesetzt ist.
wobei die erste Folie eine Faserbasis, insbesondere eine Papierbasis, umfasst, wobei diese Faserbasis mit einem Werkstoff, insbesondere einem Elastomerlatex gesättigt ist, der es gestattet, die Reißfestigkeit und den späteren Schutz der Funkfrequenzidentifizierungsvorrichtung zu gewährleisten, wobei man auf einer Seite dieser ersten Folie nach Trocknung den Chip und die Antenne der Funkfrequenzidentifizierungsvorrichtung auflegt.

2. Verfahren nach Anspruch 1, wobei der Chip der Funkfrequenzidentifizierungsvorrichtung in einer Schicht (26) der Mehrschichtstruktur eingesetzt ist, die eine Dicke aufweist, die grösser als die Dicke des Chips ist, sowie eine Widerstandsfähigkeit, dank derer sie während einer momentanen Komprimierung eine Dicke beibehalten wird, die größer oder gleich der des Chips ist.

3. Verfahren nach Anspruch 2, wobei die Schicht (26) eine Faserbasis aufweist.

4. Verfahren nach einem der Ansprüche 2 oder 3, wobei die Schicht (26) ein Polymermaterial enthält, das so gewählt ist, dass es der Mehrschichtstruktur Widerstandsfähigkeitseigenschaften verleiht, die ausreichen, um die Funkfrequenzidentifizierungsvorrichtung vor mechanischen Stößen zu schützen.

5. Verfahren nach einem der vorhergehenden Ansprüche, wobei die Mehrschichtstruktur eine Schicht aus einem für die Körnung geeigneten Material auf Polymerbasis umfasst, das insbesondere aus der folgenden Liste ausgewählt ist: Polymere auf der Basis von PVC, gegebenenfalls plastifiziert, von Polyurethanen oder natürlichen oder synthetischen Elastomeren, gegebenenfalls mit Treibmitteln, Emulsionen aus PVC und Butadien-Acrylonitril-Copolymer oder Butadien-Acrylonitril-Styrol-Copolymer und ihre Mischungen.

6. Verfahren nach einem der vorhergehenden Ansprüche, wobei die Antenne im Siebdruck hergestellt ist.

7. Verfahren nach Anspruch 1, **dadurch gekennzeichnet, dass** man die zweite Folie mit einem vertieften Wasserzeichen (50) herstellt, dessen Tiefe größer als die Dicke des Chips (31) ist, dass man den Chip auf der ersten Folie anordnet und dass man die zweite Folie mit der ersten Folie so kaschiert, dass der Chip (31) in dem Wasserzeichen (50) aufgenommen ist.

8. Verfahren nach einem der Ansprüche 1 bis 7, **dadurch gekennzeichnet, dass** die erste Folie mit einer für die Körnung geeigneten Mischung auf Polymerbasis beschichtet wird.

## Claims

1. A method of making a multilayer structure forming a passport cover paper, the structure comprising a radiofrequency identification device (31, 532) having a chip (31), the chip being received in the thickness of the multilayer structure without leading to an extra-thickness, and the materials constituting the various layers of the multilayer structure being selected, as the thicknesses of said layers, in such a manner that the cover (20) withstands mechanical and thermal shocks, and is in particular capable of being subjected to graining treatment and/or to decoration treatment by having a film deposited thereon by hot transfer under pressure, and/or to lamination treatment while depositing security films, the chip (31) being located close to a fold (21), and the structure not presenting any localized extra-thickness, the method comprising the following steps :
- placing the radio-frequency identification device on a first sheet; and the following step :
- laminating said first sheet with a second sheet, the chip of the radiofrequency identification device being situated on the inside of the first sheet, a hole or cavity being formed in the second sheet, said hole or cavity being of a shape that is suitable for receiving the chip, the chip being put into place in said hole or cavity while said sheets are being laminated together, the first sheet also comprising a cavity wherein the chip is partially received,
the first sheet comprising a fiber base, in particular a paper base, this fiber base being saturated with a material, in particular an elastomer latex, for providing resistance to tearing and subsequently for protecting the radiofrequency identification device, the chip and the antenna of the radiofrequency identification device being deposited on a face of said first sheet once dry.

2. Method according to claim 1, the chip of the radiofrequency identification device being received in a layer (26) of the multilayer structure which presents a thickness greater than the thickness of the chip and a toughness enabling it, in the event of short-term compression, to conserve thickness greater than or equal to the thickness of the chip.

3. Method according to claim 2, said layer (26) comprising a fiber base.

4. Method according to claim 2 or 3, said layer (26) comprising a polymer material selected in such a manner as to confer on the multilayer structure toughness properties that are sufficient to protect the radiofrequency identification device from mechanical shocks.

5. Method according to any one of the preceding claims, the multilayer structure comprising a layer of a polymer - based material capable of being grained in particular selected from the group consisting of PVC - based polymers; optionally plasticized, of polyurethanes or natural or synthetic elastomers, with optionally expansing agents, PVC emulsions and of butadiene/acrylonitrile copolymers or butadiene/acrylonitrile/styrene copolymers, and mixtures thereof.

6. Method according to any one of the preceding claims, the antenna being silkscreen printed.

7. Method according to claim 1, **characterized by** the fact that the second sheet is made with a hollow watermark (50) having a depth greater than the thickness of the chip (31), by the fact that the chip is placed on the first sheet, and by the fact that the second sheet and the first sheet are laminated together in such a manner that the chip (31) is received in the watermark (50).

8. Method according to any one of claims 1 to 7, **characterized by** the fact that the first sheet is coated with a polymer-based mixture that is suitable for graining.
